# EUROPEAN PATENT APPLICATION

(11) **EP 4 757 186 A1**
(43) Date of publication of application: **10.06.2026**
(21) Application number: 25156451.4
(22) Date of filing: 07.02.2025
(51) Int. Cl.: H04B 1/00, H04B 17/309, H04B 1/04

(54) **WIRELESS COMMUNICATION DEVICE AND METHOD FOR SWITCHING OPERATION FREQUENCY BAND**

(30) Priority: 06.12.2024 TW 113147338
(71) Applicant: Moxa Inc., 242032 New Taipei City (TW)
(72) Inventor: Wei, Kuo-Feng, 242032 New Taipei City (TW); Ko, Jung-Chieh, 242032 New Taipei City (TW)
(74) Representative: Kurig, Thomas

(57) **Abstract**

Provided are a wireless communication device (100) and a method for switching operation frequency bands. The wireless communication device (100) includes a first antenna, a second antenna, and a controller (130). The controller (130) is coupled to the first antenna and the second antenna and is configured to: monitor a first frequency band through the first antenna and the second antenna to obtain a first measurement result; and switch a data channel of the first antenna from the first frequency band to a second frequency band different from the first frequency band according to the first measurement result.

## Description

### BACKGROUND

### Technical Field

The disclosure relates to a wireless communication technology, and in particular, to a wireless communication device and a method for switching operation frequency bands.

### Description of Related Art

Currently, an increasing number of devices use communication protocols corresponding to industrial scientific medical (ISM) frequency bands such as 2.4GHz or 5GHz, making wireless communication devices in the ISM frequency band susceptible to interference, which in turn reduces the transmission throughput of wireless communication devices or causes a wireless communication device to lose network connection. The foregoing situation might cause losses and inconvenience to users of wireless communication devices. Therefore, how to prevent wireless communication devices using the ISM frequency band from being interfered with and unable to operate normally is an important topic in this field.

### SUMMARY

The disclosure provides a wireless communication device and a method for switching operation frequency bands, which can continuously monitor a specific frequency band to determine whether to use the frequency band to perform a data transmission.

The disclosure provides a wireless communication device for switching operation frequency bands, including a first antenna, a second antenna and a controller. The controller is coupled to the first antenna and the second antenna, and is configured to: monitor a first frequency band through the first antenna and the second antenna to obtain a first measurement result; and switch a data channel of the first antenna from the first frequency band to a second frequency band different from the first frequency band according to the first measurement result.

In an embodiment of the disclosure, the foregoing controller is configured to further: determine whether the first measurement result meets a first switching condition; and switch the data channel of the first antenna from the first frequency band to the second frequency band in response to determining that the first measurement result meets the first switching condition.

In an embodiment of the disclosure, the foregoing wireless communication device further includes a frequency conversion circuit. The controller is coupled to the first antenna through the frequency conversion circuit, and the frequency conversion circuit includes a first switch, a second switch and a mixer. The first switch is coupled to the controller. The second switch is coupled to the controller, and is coupled to the first switch through one of a first path and a second path. The mixer is disposed on the second path. The controller is configured to further: configure the first switch and the second switch to enable the second path and disable the first path in response to determining that the first measurement result meets the first switching condition.

In an embodiment of the disclosure, the foregoing frequency conversion circuit further includes a frequency synthesizer. The frequency synthesizer is coupled to the mixer and provides the mixer with an oscillation signal. The mixer converts a data signal corresponding to the data channel from the first frequency band to the second frequency band according to the oscillation signal.

In an embodiment of the disclosure, the foregoing frequency conversion circuit further includes a radio frequency front end circuit. The mixer is coupled to the second switch through the radio frequency front end circuit. The radio frequency front end circuit includes at least one of the following: a switch, a power amplifier, a filter, and a low-noise amplifier.

In an embodiment of the disclosure, the foregoing controller is further configured to: obtain a lookup table, which includes a mapping relationship between a data rate and a Rx required sensitivity; and query a required sensitivity corresponding to a minimum data rate from the lookup table; and configure the first switching condition according to the required sensitivity.

In an embodiment of the disclosure, the foregoing controller is further configured to: monitor the first frequency band through the second antenna to obtain a second measurement result in response to switching the data channel of the first antenna from the first frequency band to the second frequency band.

In an embodiment of the disclosure, the foregoing controller is further configured to: determine whether the second measurement result meets a second switching condition; and switch the data channel of the first antenna from the second frequency band back to the first frequency band in response to determining that the second measurement result meets the second switching condition.

In an embodiment of the disclosure, the foregoing controller is further configured to: use the first antenna to access the data channel and a first control channel to perform a data transmission and a first control signaling transmission; and use the second antenna to access a second control channel to perform a second control signaling transmission.

In an embodiment of the disclosure, the foregoing first measurement result includes at least one of the following: a Rx required sensitivity, a signal-to-noise ratio, and a received signal strength indicator.

In an embodiment of the disclosure, the foregoing first frequency band includes at least one of a 5 GHz frequency band and a 2.4 GHz frequency band.

In an embodiment of the disclosure, the foregoing second frequency band includes at least one of a legal license-free spectrum and a sub-1 GHz frequency band.

According to the disclosure, a method for switching operation frequency bands includes: a first frequency band is monitored through a first antenna and a second antenna to obtain a first measurement result; and a data channel of the first antenna is switched from the first frequency band to a second frequency band different from the first frequency band according to the first measurement result.

Based on the above, the wireless communication device of the disclosure may establish a data channel for a data transmission on the first frequency band, and switch the data channel to the second frequency band to perform the data transmission when the communication quality of the first frequency band is poor. When the second frequency band is used to perform the data transmission, the wireless communication device may continuously monitor the first frequency band. After the communication quality of the first frequency band is determined to be improved, the wireless communication device may switch the data channel back to the first frequency band to fully utilize the wireless communication resources of the first frequency band.

### BRIEF DESCRIPTION OF THE DRAWINGS

FIG. 1 is a schematic diagram of a wireless communication device for switching operation frequency bands according to an embodiment of the disclosure.
FIG. 2 is a flow chart of a method for switching operation frequency bands according to an embodiment of the disclosure.
FIG. 3 is a flow chart of a method for switching operation frequency bands according to another embodiment of the disclosure.

### DESCRIPTION OF THE EMBODIMENTS

In order to make the features and advantages of the disclosure more comprehensible, the following examples are given and described in detail with the accompanying drawings as follows. In addition, wherever possible, elements/components/steps with the same reference numerals in the drawings and embodiments represent the same or similar parts.

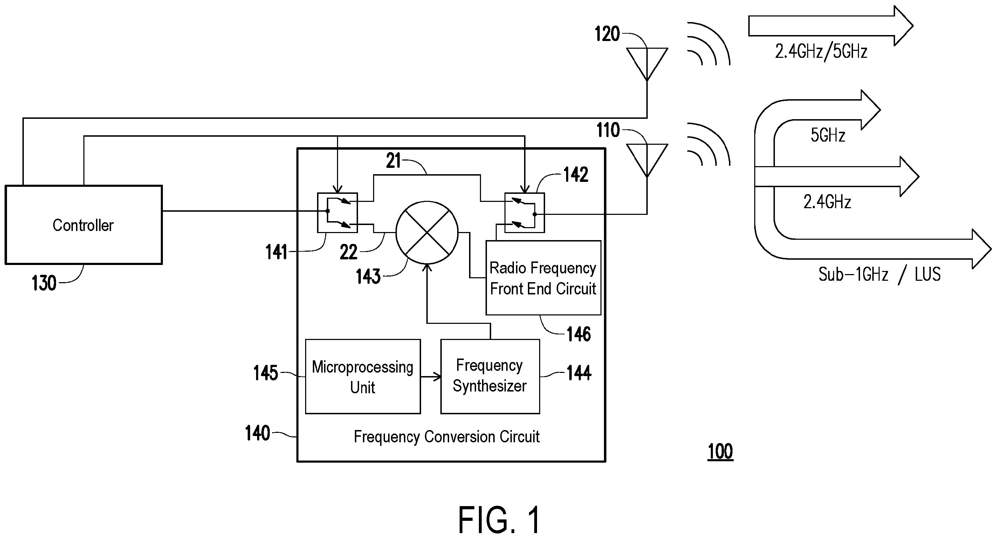

FIG. 1 is a schematic diagram of a wireless communication device 100 for switching operation frequency bands according to an embodiment of the disclosure. The wireless communication device 100 may include an antenna 110, an antenna 120, a controller 130 and a frequency conversion circuit 140. The wireless communication device 100 in FIG. 1 only includes two antennas, but the disclosure is not limited thereto. For example, the number of antennas of the wireless communication device 100 may be greater than 2. In an embodiment, the wireless communication device 100 may further include a receiver (not shown in the figure) coupled to the antenna 110 and the antenna 120. The receiver may obtain a radio frequency signal received by the antenna 110 or the antenna 120 from the antenna 110 or the antenna 120. The receiver and controller 130 may be implemented by the same or different hardware.

The controller 130 is, for example, an access point (AP) or a router. The controller 130 may include a central processing unit (CPU), or other programmable general-purpose or special-purpose micro control unit (MCU), microprocessor, digital signal processor (DSP), programmable controller, application specific integrated circuit (ASIC), graphics processing unit (GPU), image signal processor (ISP), image processing unit (IPU), arithmetic logic unit (ALU), complex programmable logic device (CPLD), field programmable gate array (FPGA) ) or other similar elements or a combination of the foregoing elements. The controller 130 may be coupled to the antenna 120, and may be coupled to the antenna 110 through a frequency conversion circuit 140. In an embodiment, the controller 130 may transmit or receive radio frequency signals.

The antenna 110 may be coupled to the controller 130 and the frequency conversion circuit 140. The antenna 110 may support a first frequency band and a second frequency band different from the first frequency band. The first frequency band includes ISM frequency bands such as 2.4GHz or 5GHz, and the second frequency band may include a legal unlicensed spectrum (LUS) or a sub-1GHz frequency band. The antenna 120 may be coupled to the controller 130. The antenna 120 may support the first frequency band. The controller 130 may transmit a radio frequency signal to the antenna 110 on the first frequency band to radiate the radio frequency signal by the antenna 110.

In an embodiment, the controller 130 may use the antenna 110 or the antenna 120 to access a data channel and a control channel to perform a data transmission and a control signaling transmission. In an embodiment, the controller 130 may use the antenna 120 to access the control channel to perform the control signaling transmission.

The frequency conversion circuit 140 is, for example, a Wi-Fi converter. The frequency conversion circuit 140 may include a switch 141, a switch 142, a mixer 143, a frequency synthesizer 144, and a microprocessing unit 145. In an embodiment, the frequency conversion circuit 140 may further include a radio frequency front end circuit 146. The switch 141 or the switch 142 may be coupled to the controller 130 and controlled by the controller 130. The switch 141 may be coupled to the switch 142 through one of a path 21 and a path 22. For example, the controller 130 may send signals to the switch 141 and the switch 142 to enable the path 21 and disable the path 22. At this time, the radio frequency signal (for example, a data signal corresponding to the data channel) output by the controller 130 may be transmitted to the antenna 110 through the path 21, and the radio frequency signal is radiated by the antenna 110. In addition, the radio frequency signal received by the antenna 110 may be transmitted to the controller 130 through the path 21. On the other hand, the controller 130 may send signals to the switch 141 and the switch 142 to enable the path 22 and disable the path 21. At this time, the radio frequency signal output by the controller 130 may be transmitted to the antenna 110 through the path 22, and the radio frequency signal is radiated by the antenna 110. In addition, the radio frequency signal received by the antenna 110 may be transmitted to the controller 130 through the path 22.

The mixer 143 may be disposed on the path 22. The frequency synthesizer 144 may be coupled to the mixer 143, and the microprocessing unit 145 may be coupled to the frequency synthesizer 144. The microprocessing unit 145 may control the frequency synthesizer 144 to provide the mixer 143 with an oscillation signal. When a radio frequency signal in the first frequency band output by the controller 130 (such as a data signal corresponding to the data channel) passes through the mixer 143 on the path 22, the mixer 143 may convert the radio frequency signal from the first frequency band to the second frequency band according to the oscillation signal. The antenna 110 may radiate a radio frequency signal in the second frequency band.

The radio frequency front end circuit 146 may be disposed on the path 22, and may be disposed between the mixer 143 and the switch 142. Before a radio frequency signal output by the mixer 143 is sent to the switch 142, the radio frequency front end circuit 146 may perform a signal processing on the radio frequency signal. The radio frequency front end circuit 146 may include, but is not limited to, a switch, a power amplifier (PA), a filter or a low-noise amplifier (LNA).

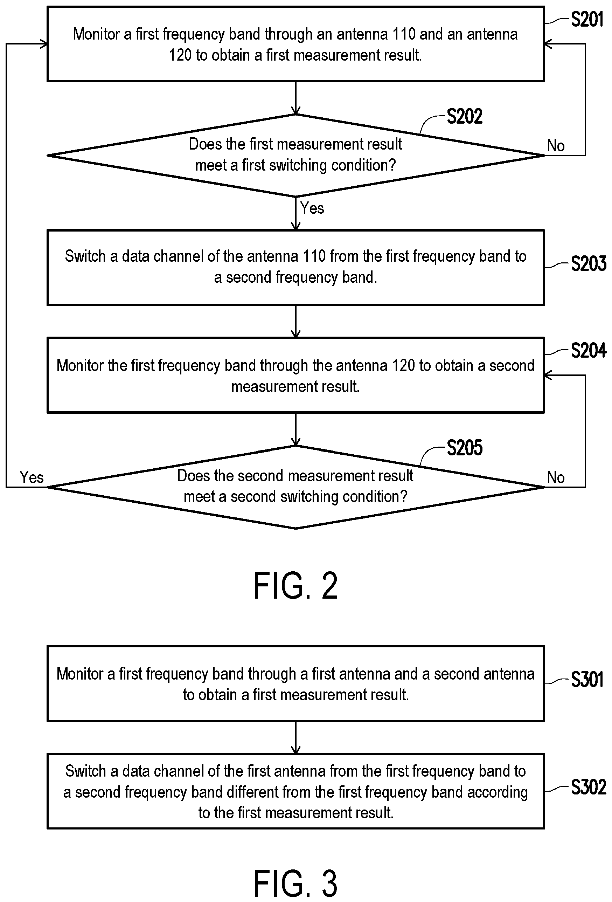

FIG. 2 is a flow chart of a method for switching operation frequency bands according to an embodiment of the disclosure. The method may be implemented by the wireless communication device 100 shown in FIG. 1.

In step S201, the controller 130 may monitor a first frequency band through the antenna 110 and the antenna 120 to obtain a first measurement result. The first measurement result may include, but is not limited to, Rx required sensitivity, signal-to-noise ratio (SNR) or received signal strength indicator (RSSI). The controller 130 may configure a data channel of the antenna 110 on the first frequency band to perform a data transmission on the first frequency band.

In step S202, the controller 130 may determine whether the first measurement result meets a first switching condition. If the first measurement result meets the first switching condition, step S203 is performed. If the first measurement result does not meet the first switching condition, step S201 is performed again.

In an embodiment, the first switching condition may include a threshold. The controller 130 may determine that the first measurement result meets the first switching condition in response to a measurement value of the first measurement result (such as Rx required sensitivity, SNR or RSSI) being less than or equal to the threshold, and may determine that the first measurement result does not meet the first switching condition in response to the measurement value of the first measurement result being greater than the threshold.

In an embodiment, the controller 130 may configure the first switching condition according to the contents of a lookup table. Specifically, the lookup table may include a mapping relationship between a packet error rate (PER), a data rate and a Rx required sensitivity. The controller 130 may select a minimum data rate that is compatible with the packet error rate requirement from the lookup table, and define the Rx required sensitivity corresponding to the minimum data rate as a required sensitivity. The controller 130 may configure the threshold of the first switching condition according to the required sensitivity.

Table 1 is an example of a lookup table corresponding to a 2.4GHz frequency band. Table 1 may contain a mapping relationship between a packet error rate, a data rate and a Rx required sensitivity. It is assumed that the packet error rate of a data channel needs to be less than or equal to 8%. The controller 130 may select a data rate 2Mb/s from Table 1 based on the data rate 2Mb/s as a minimum data rate that meets the packet error rate requirement, and define a Rx required sensitivity -80dBm corresponding to the data rate 2Mb/s as a required sensitivity. The controller 130 may configure the required sensitivity -80dBm as a first switching condition. That is to say, if the Rx required sensitivity of the first frequency band measured by the wireless communication device 100 is less than or equal to -80dBm, the controller 130 may determine that the measurement result meets the first switching condition.

**Table 1**

| Data Rate (Mb/s) | Package Error Rate (%) | Rx Required Sensitivity (dBm) |
|---|---|---|
| 2 | 8 | -80 |
| 11 | 8 | -76 |

Table 2 is an example of a lookup table corresponding to a 5GHz frequency band. Table 2 may include a mapping relationship between a packet error rate, a data rate and a Rx required sensitivity. It is assumed that the packet error rate of a data channel needs to be less than or equal to 10%. The controller 130 may select a data rate 6Mb/s from Table 2 based on the data rate 6Mb/s as a minimum data rate that meets a packet error rate requirement, and define a Rx required sensitivity -82dBm corresponding to the data rate 6Mb/s as a required sensitivity. The controller 130 may configure the required sensitivity -82dBm as a first switching condition. That is to say, if the Rx required sensitivity of the first frequency band measured by the wireless communication device 100 is less than or equal to -82dBm, the controller 130 may determine that the measurement result meets the first switching condition.

**Table 2**

| Data Rate (Mb/s) | Package Error Rate (%) | Rx Required Sensitivity (dBm) |
|---|---|---|
| 6 | 10 | -82 |
| 9 | 10 | -81 |
| 12 | 10 | -79 |
| 18 | 10 | -77 |
| 24 | 10 | -74 |
| 36 | 10 | -70 |
| 48 | 10 | -66 |
| 54 | 10 | -65 |

In step S203, the controller 130 may switch the data channel of the antenna 110 from the first frequency band to the second frequency band according to the first measurement result. Specifically, the controller 130 may send a signal to the switch 141 and the switch 142. The signal may include a general-purpose input/output (GPIO) command. The GPIO command may configure the switch 141 and the switch 142 to enable the path 22 and disable the path 21. Accordingly, the data signal output by the controller 130 may be transmitted to the antenna 110 through the path 22. The mixer 143 on the path 22 may switch an operation frequency band of a carrier of the data signal from the first frequency band to the second frequency band.

In step S204, while the data channel of the antenna 110 is switched to the second frequency band, the controller 130 may monitor the first frequency band through the antenna 120 to obtain a second measurement result. The second measurement result may include, but is not limited to, a Rx required sensitivity, a SNR or a RSSI.

In step S205, the controller 130 may determine whether the second measurement result meets a second switching condition. If the second measurement result meets the second switching condition, the controller 130 may switch the data channel of the antenna 110 from the second frequency band back to the first frequency band. The controller 130 may re-perform step S201. If the second measurement result does not meet the second switching condition, the controller 130 may re-perform step S204.

In an embodiment, the controller 130 may configure the second switching condition based on the same or similar method as the first switching condition. For example, the controller 130 may configure the second switching condition according to the contents of a lookup table.

FIG. 3 is a flow chart of a method for switching operation frequency bands according to another embodiment of the disclosure. The method may be implemented by the wireless communication device 100 shown in FIG. 1. In step S301, a first frequency band is monitored through a first antenna and a second antenna to obtain a first measurement result. In step S302, a data channel of the first antenna is switched from the first frequency band to a second frequency band different from the first frequency band according to the first measurement result.

In summary, the wireless communication device of the disclosure may include a first antenna and a second antenna configured for performing a data transmission and configured for performing a control signaling transmission. When the communication channel of the first frequency band (such as ISM frequency band) has a good gain, the wireless communication device may access the first frequency band through the first antenna to perform the data transmission. When the first frequency band is interfered with and results in poor communication quality, the wireless communication device may switch the data channel configured for the data transmission to the second frequency band. At this time, the wireless communication device may still measure the communication quality of the first frequency band through the second antenna. After the communication quality of the first frequency band is determined to be improved, the wireless communication device may switch the data channel to the first frequency band. Accordingly, the wireless communication device can fully utilize the wireless communication resources of the first frequency band while maintaining the reliability of wireless communication.

## Claims

1. A wireless communication device (100) for switching operation frequency bands, comprising:
a first antenna;
a second antenna; and
a controller (130), coupled to the first antenna and the second antenna, and configured to:
monitor a first frequency band through the first antenna and the second antenna to obtain a first measurement result; and
switch a data channel of the first antenna from the first frequency band to a second frequency band different from the first frequency band according to the first measurement result.

2. The wireless communication device (100) according to claim 1, wherein the controller (130) is configured to further:
determine whether the first measurement result meets a first switching condition; and
switch the data channel of the first antenna from the first frequency band to the second frequency band in response to determining that the first measurement result meets the first switching condition.

3. The wireless communication device (100) according to claim 2, further comprising:
a frequency conversion circuit (140), wherein the controller (130) is coupled to the first antenna through the frequency conversion circuit (140), and the frequency conversion circuit (140) comprises:
a first switch, coupled to the controller (130);
a second switch, coupled to the controller (130), and coupled to the first switch through one of a first path and a second path; and
a mixer (143), disposed on the second path, wherein the controller (130) is configured to further:
configure the first switch and the second switch to enable the second path and disable the first path in response to determining that the first measurement result meets the first switching condition.

4. The wireless communication device (100) according to claim 3, wherein the frequency conversion circuit (140) further comprises:
a frequency synthesizer (144), coupled to the mixer (143) and providing the mixer (143) with an oscillation signal, wherein the mixer (143) converts a data signal corresponding to the data channel from the first frequency band to the second frequency band according to the oscillation signal.

5. The wireless communication device (100) according to claim 3, wherein the frequency conversion circuit (140) further comprises:
a radio frequency front end circuit (146), wherein the mixer (143) is coupled to the second switch through the radio frequency front end circuit (146), and the radio frequency front end circuit (146) comprises at least one of the following: a switch (141, 142), a power amplifier, a filter and a low-noise amplifier.

6. The wireless communication device (100) according to claim 2, wherein the controller (130) is further configured to:
obtain a lookup table, wherein the lookup table comprises a mapping relationship between a data rate and a Rx required sensitivity; and
query a required sensitivity corresponding to a minimum data rate from the lookup table; and
configure the first switching condition according to the required sensitivity.

7. The wireless communication device (100) according to claim 1, wherein the controller (130) is further configured to:
monitor the first frequency band through the second antenna to obtain a second measurement result in response to switching the data channel of the first antenna from the first frequency band to the second frequency band.

8. The wireless communication device (100) according to claim 7, wherein the controller (130) is further configured to:
determine whether the second measurement result meets a second switching condition; and
switch the data channel of the first antenna from the second frequency band back to the first frequency band in response to determining that the second measurement result meets the second switching condition.

9. The wireless communication device (100) according to claim 1, wherein the controller (130) is further configured to:
use the first antenna to access the data channel and a first control channel to perform a data transmission and a first control signaling transmission; and
use the second antenna to access a second control channel to perform a second control signaling transmission.

10. The wireless communication device (100) according to claim 1, wherein the first measurement result comprises at least one of the following: a Rx required sensitivity, a signal-to-noise ratio, and a received signal strength indicator.

11. The wireless communication device (100) according to claim 1, wherein the first frequency band comprises at least one of a 5 GHz frequency band and a 2.4 GHz frequency band.

12. The wireless communication device (100) according to claim 1, wherein the second frequency band comprises at least one of a legal license-free spectrum and a sub-1 GHz frequency band.

13. A method for switching operation frequency bands, comprising:
monitoring a first frequency band through a first antenna and a second antenna to obtain a first measurement result; and
switching a data channel of the first antenna from the first frequency band to a second frequency band different from the first frequency band according to the first measurement result.
